(19) **Europäisches Patentamt**

**European Patent Office**

**Office européen des brevets**

(11) **EP 0 591 181 B1**

(12) **EUROPEAN PATENT SPECIFICATION**

(45) Date of publication and mention
of the grant of the patent:
**08.03.2000 Bulletin 2000/10**

(51) Int. Cl.[7]: **C08B 37/00**

(86) International application number:
**PCT/US91/03978**

(21) Application number: **91911891.9**

(22) Date of filing: **06.06.1991**

(87) International publication number:
**WO 92/00307 (09.01.1992 Gazette 1992/02)**

(54) **FRACTIONS OF DERIVATIZED AGAROSE AND PROCESSES THEREFOR**

FRAKTIONEN MODIFIZIERTER AGAROSE UND VERFAHREN ZU DEREN HERSTELLUNG

FRACTIONS D'AGAROSE DERIVATISE ET LEURS PROCEDES DE PREPARATION

(84) Designated Contracting States:
**AT BE CH DE DK ES FR GB GR IT LI LU NL SE**

(30) Priority: **13.06.1990 US 537851**

(43) Date of publication of application:
**13.04.1994 Bulletin 1994/15**

(73) Proprietor: FMC CORPORATION
**Philadelphia, PA 19103 (US)**

(72) Inventors:
• **DUMAIS, Maxine M.**
  **Rockland ME 04841 (US)**
• **GUISELEY, Kenneth B.**
  **Union, ME 04862 (US)**

(74) Representative:
**McCall, John Douglas**
**W.P. THOMPSON & CO.**
**Coopers Building**
**Church Street**
**Liverpool L1 3AB (GB)**

(56) References cited:
**GB-A- 1 023 179       US-A- 3 176 003**
**US-A- 3 281 409       US-A- 3 753 972**
**US-A- 3 956 273       US-A- 4 983 268**

• **No further relevant documents have been disclosed.**

**Description**

This invention relates to compounds obtained by the fractionation of agarose and/or derivatized agarose, as well as processes for their manufacture.

Most polymeric substances, whether natural or manmade, are actually mixtures. Some mixtures may be relatively simple, in that they vary only in molecular weight. Others may vary chemically. Examples of the first type of mixture would include many synthetic materials such as polyethylene or polystyrene. The second type is broadly represented by natural polymers, for example, polysaccharides. In order to analyze and understand the constitution of polysaccharides, means must be found for fractionating the polysaccharide, since a chemical analysis of a newly found substance will be of little use if the substance actually consists of more than one chemical entity, that is is not pure. Examples of land plant polysaccharides which have been fractionated are starch (amylose and amylopectin), Iles mannan (a glucomannan and a glucan similar to amylose), and locust bean gum (greater or lesser degree of substitution of galactose on the mannan backbone). Similarly, polysaccharides derived from seaplants (sea-weeds, macroalgae) have also been fractionated, for example, algin (D-mannuronic acid-rich and L-guluronic acid-rich fractions), carrageenan (kappa- and lambda-), and agar (agarose and agaropectin).

The methods used for fractionation vary depending upon the nature of the polysaccharides. Thus, if one is soluble in both hot and cold water, and is found mixed with one which is soluble only in hot water, the latter can be separated by cooling a hot solution of the mixture. Laminarin from brown seaweeds can be resolved into a branched form and an unbranched form in this manner. Sometimes charged polysaccharides have a different affinity for a specific cation. Thus, kappa carrageenan can be separated from lambda carrageenan by means of differential solubility in the presence of potassium salts. The separation of charged from un-charged polysaccharides can be accomplished by selective precipitation using oppositely charged molecules, and in the case of agar, at least, by a phase separation technique involving polyethylene glycol. These last three fractionation techniques are disclosed in the patent literature, viz, Stancioff, D.J., "Selective Extraction of Hydrocolloid Fractions from Sea Plants", U.S. Pat. 3,176,003, Mar. 30, 1965; Blethen, J., "Method for the Separation of Agaropectin from Agarose", U.S. Pat. 3,281,409, Oct. 25, 1966, and Polson, A., "Fractionation of Mixtures of Agarose and Agaropectin", Brit. Pat. 1,023,179, Mar. 23, 1966, respectively.

The fractionation of agar has also been investigated extensively by Duckworth and Yaphe, Izumi, and more recently, a number of others using the techniques developed by these researchers. Their fractionation methods were designed primarily as a tool to study the overall relationship of the various fractions. The technique they employed was that of ion exchange chromatography. As a result of their studies, Duckworth and Yaphe concluded that agar did not consist of two discrete polymers, agarose and agaropectin, but rather was a continuum of molecules ranging in charge density from highly sulfated, non-pyruvated to moderately sulfated and pyruvated to virtually uncharged. They redefined agarose as a result of this work as "that fraction of the complex of molecules in agar, with the lowest charge content and therefore greatest gelling ability", and patented a process for isolating this fraction (U.S. Pat. 3,753,972, Aug. 21, 1973). Essentially, the method consists of washing agar with dilute aqueous saline, first at room temperature, to remove highly sulfated molecules, then at 30-50°C to remove the most heavily pyruvated molecules. The washed agar was then purified with polyethylene glycol precipitation and subsequent treatment of this intermediate, after redissolution, by ion exchange chromatography. The product was said to contain substantially no detectable pyruvate and have a sulfate content of not more than about 0.05% by weight.

Analysis of commercial agarose reveals that most types contain about 0.2% pyruvate, and as techniques have improved in sulfate removal, sulfate levels have dropped from the range of 0.5% found in early agarose preparations to about 0.1 to 0.2%. However, extensive treatment with alkali, such as is employed in the production of certain agarose derivatives (Guiseley, K.B., "Modified Agarose and Agar and Method of Making Same", U.S. Pat. 3,956,273, May 11, 1976) leads to further elimination of sulfate so that derivatives such as hydroxyethyl agarose, sold by FMC Corporation, Rockland, Maine under the trademarks SeaPlaque® and SeaPrep® agarose, generally contain about 0.02-0.08% sulfate. They also contain about 0.2% pyruvate, since the process does not effectively remove pyruvate.

In the process of the invention, a solution is formed of an agarose or derivatized agarose in an aqueous medium or in a $C_2$-$C_5$ polyol containing a small amount of water. A first precipitate (hereinafter: Fraction A) is formed either by contacting the aqueous solution with a polar solvent or by cooling the polyol solution, which Fraction A has characteristics that will be described below in detail. The precipitate is removed from the solution, and the supernatant solution optionally can then be treated with an aqueous salt solution to form a second precipitate (hereinafter: Fraction B) which has been found to be significantly different from Fraction A.

In a further embodiment, where the agarose starting material is non-derivatized, Fractions A and/or B are subsequently derivatized.

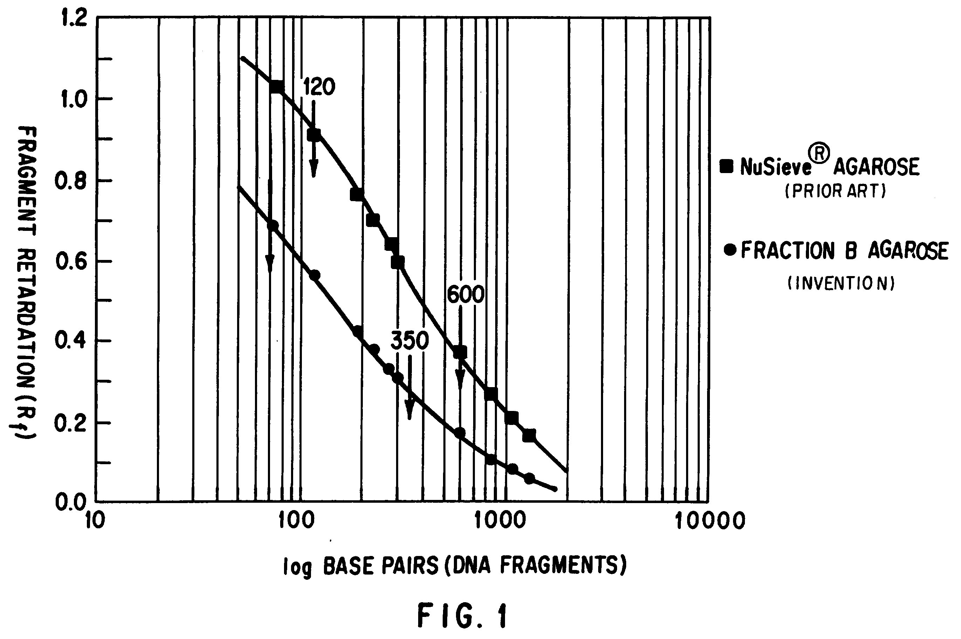

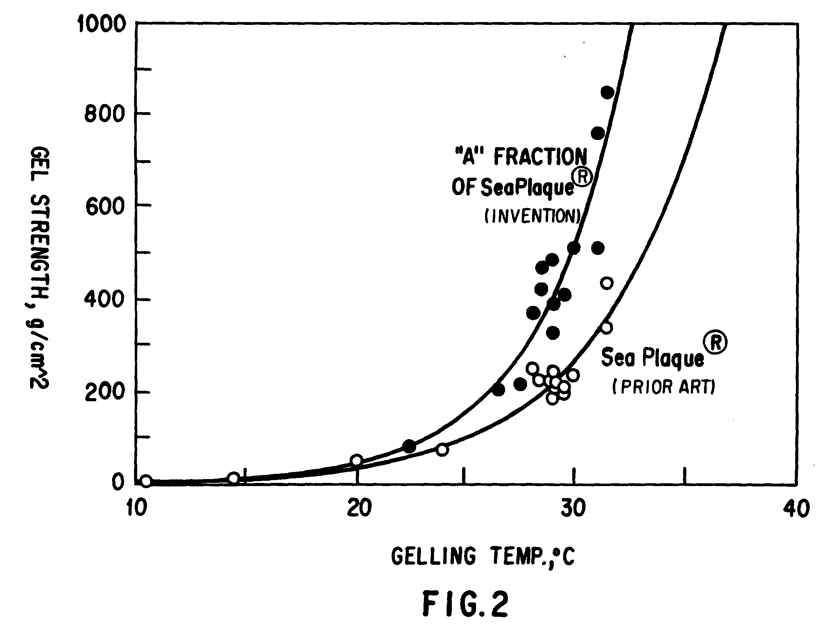

Figure 1 is curves in which Fragment Retardation ($R_f$) is plotted against base pairs of DNA fragments to compare values obtained with a prior art agarose and a Fraction B derivatized agarose product of the invention. Figure 2 is curves showing gel strength v. gelling temperature for this invention and for the prior art.

Other than in the operating examples, or where otherwise indicated, all numbers expressing quantities of ingredients, parameters, or reaction conditions used herein are to be understood as modified in all instances by the term "about".

The process of this invention broadly comprises the following process steps:

(i) forming a solution of a native or derivatized agarose either in

an aqueous medium, or
in a $C_2$-$C_5$ polyol containing from 1 to about 20% by weight of water.

(ii) contacting the above solution with a water-miscible polar solvent such as a $C_1$-$C_4$ alkanol or acetone when the solution comprises an aqueous medium, or cooling the solution when the solution comprises a $C_2$-$C_5$ polyol, resulting in formation of a precipitate comprising Fraction A;
(iii) isolating the Fraction A precipitate from the solution, and
(iv) optionally contacting the remaining supernatant solution with an aqueous salt solution present in a precipitation-inducing effective amount to produce a precipitate comprising Fraction B.

When a non-derivatized agarose is used as the starting material, Fraction A and/or Fraction B is then derivatized in a known manner, such as disclosed in U.S. patent 3,956,273.

Step (i) is preferably carried out when an aqueous medium is employed by slurrying the starting agarose or derivatized agarose into distilled water, and repeatedly filtering and resuspending if needed, until conductivity measurements indicate that the salt content has been reduced to below 10 mM of salt as NaCl, more preferably below 4mM, and most preferably to as low a level as is economically feasible, for example to a level corresponding to 2 mM or less as NaCl. The salt content is ideally in the range of from 0.003 to 0.4 mM. The resulting suspension is then heated to dissolve the derivatized agarose or the agarose (for example to a boil). The resulting solution is then cooled, preferably to a temperature in the range of from 50 to 75°C. The pH is preferably in the range of from 6.0 to 8.0; more preferably in the range of from 7.0 to 7.4, and most preferably at 7.2. If the pH is not within the desired range, the pH can be adjusted within the desired range by the addition of an alkali or acid, for example NaOH or acetic acid.

When step (i) is carried out using a $C_2$-$C_5$ polyol containing from 1 to 20%, preferably 1 to 15%, by weight of water, the agarose or derivatized agarose is dissolved in the polyol by heating until solution is effected. Propylene glycol is the preferred $C_2$-$C_5$ polyol.

The derivatized agarose can be an alkylated, alkenylated, acylated or hydroxyalkylated agarose in which the alkyl, alkenyl and acyl groups contain from 1 to 4 carbon atoms and the hydroxyalkyl groups are mono-hydroxyalkyl groups containing from 2 to 4 carbon atoms or dihydroxyalkyl groups containing from 3 to 4 carbon atoms. Such derivatized agaroses are known, including methods for their preparation: See U.S. 3,956,273 discussed above. For example, dihydroxypropyl agarose can be prepared by reacting agarose with 1-chloro-2,3-dihydroxypropane. While derivatized agarose from any source can be used in the practice of the invention, a derivatized agarose in which the agarose is obtained from _Gelidium_, or _Pterocladia_ algal species, a mixture of _Gracilaria_ with the preceding, or from any mixture thereof, is preferred. Also, the derivatized agarose preferred for use herein is a $C_2$-$C_3$ hydroxyalkylated agarose, a $C_1$-$C_3$ alkylated agarose, glyoxal agarose, or dihydroxypropyl agarose. Most preferred are hydroxy-ethylated agarose and methylated agarose.

The non-derivatized or native agarose when used in step (i) can be obtained from any source, although agarose from _Gelidium_, or _Pterocladia_ algal species, or any mixture thereof with _Gracilaria_ are preferred.

In step (ii), when the solution obtained in step (i) is aqueous, it is contacted with a water-miscible polar solvent such as a $C_1$-$C_4$ alkanol or acetone, preferably isopropyl alcohol (preferably heated, for example to 40°C) to form a precipitate. The precipitate obtained in step (ii) of the first process (Fraction A) can be rinsed with the polar solvent or an aqueous solution thereof, and dried.

The quantity of polar solvent added to the aqueous solution from step (i) is not critical. In general, a quantity sufficient to produce a precipitate in the range of from 10 to 50% by weight of the weight of the derivatized or non-derivatized agarose used in step A is preferred. For example, a volume of polar solvent twice to three times that of the solution from step (i) is quite suitable.

It is preferred to add the polar solvent to the aqueous solution rather than the reverse. It is most preferred to add the polar solvent below the surface of the aqueous solution, while providing continuous agitation. The latter method was found to result in a product that had the most favorable characteristics, regardless the starting material.

When the solution in step (i) is a polyol solution, the heated solution is then cooled, for example to room temperature, to form the precipitation step B. The rate of cooling is not critical, although slightly different products may be obtained when slowly cooling or rapidly cooling.

In step (iii) Fraction A can be isolated from the remaining solution by any suitable technique, such as by filtration or decanting.

3

The Fraction A products obtained both from treating derivatized agarose initially and from a corresponding derivatization after fractionation are quite similar to each other. They are characterized by a gelling temperature in the range of from 20°C to 32°C, a gel strength in the range of from 50 to 900 $g/cm^2$ at 1.0 wt. % concentration, wherein the gel strength increases within the above range as the gelling temperature increases with the above range, in electroendosmosis value of less than 0.04, a Brookfield viscosity measured at 1.5% concentration in 0.1M NaCl at 60°C of more than 12 m Pa.s, and a pyruvate content of less than 0.07 wt. %.

Preferred Fraction A products which can be obtained are those in which the gelling temperature is in the range of from 27°C to 30°C, and the gel strength is in the range of from 200 to 550 $g/cm^2$.

The gel strength of Fraction A for a given gelling temperature always will be greater than that of the derivatized agarose starting material at the same gelling temperature. In addition, known low gelling temperature derivatized agaroses have gel strengths of from 40 to less than 500 in the 20°C to 32°C gelling temperature range, which are gel strengths significantly less than those of the Fraction A products of the present invention. (See Figure 2).

In addition to the above Fraction A products, a second agarose product, initially or subsequently derivatized, (Fraction B) having significantly different characteristics from the above Fraction A products can also be obtained, if desired.

In step (iv) of the invention process, when a precipitating-effective quantity of an aqueous salt, preferably sodium chloride solution, is added to the solution obtained in step (iii), a second precipitate (Fraction B) is formed. It is highly preferred in carrying out this step also to add a quantity of a $C_1$-$C_4$ alkanol or acetone together with the aqueous salt solution, in order to form a more easily filterable precipitate. The quantity of alkanol or acetone added is not critical. In general, however, use of from half to twice the quantity of the solution from step (iii) is satisfactory.

Fraction B which remains derivatized or is subsequently depending upon the starting material, contains from 0.3 to 0.4% pyruvate and has an electroendosmosis (EEO) value of from 0.07 to 0.11. The gel strength of the Fraction B product is significantly less than the gel strength of the corresponding Fraction A product. The Fraction B product has a brittleness value greater than 125 mm of gel in accordance with the test set forth in Example 4B. The turbidity of the Fraction B product is less than 100 NTU at 1% when measured through 5 cm of gel.

The process of the invention produces a result more complex than a simple fractionation of agarose according to molecular size, since the two product fractions obtained have significantly different gel strengths, pyruvate percentages, and electroendosmosis values. Without limitation as to patentability, a possible mechanism for the fractionation is that it is one based on molecular weight and that the low MW fraction coincidentally has a high level of acidic groups in the form of pyruvic acid. This mechanism is further supported by the desirability of carrying out the fractionation step in the virtual absence of salts since salts will promote the coprecipitation of the more ionic fraction.

The products (Fractions A and B) obtained in accordance with the invention form stable gels in water, and can be used in any of the many electrophoretic or diffusion procedures for which agarose media are conventionally used, and in accordance with well known protocols. For example, in addition to electrophoresis, the agaroses are useful for isoelectric focusing, chromatographic separations, and other processes for separating, assaying, supporting, transforming (culturing, cleaning, cloning, etc.) or treating biological materials.

Because of the reduced pyruvate content of Fraction A, this product has a very low electroendosmosis (EEO) value. A backward flow of solvent and hydrated cations has an effect on all materials undergoing electrophoresis. Neutral molecules are swept backward, (toward the cathode) while cations are speeded up and anions are retarded. Retardation and reverse migration may be beneficial in certain applications such as counter-electrophoresis, since the success of the process depends on the backward migration of certain components. Generally, however, it does not provide an advantage in the separation of DNA molecules, but rather, simply slows down the process, causing longer electrophoretic run times. When the runs require many hours or even days, as in PFGE, it is a proven fact that lower EEO is an advantage (See, for example, Lai, E., Birren, B.W., Clark, S.M., Simon, M.I., and Hook, L. (1989) BioTechniques 7, 37-42).

The invention will be illustrated by the following examples:

Examples

Electroendosmosis (EEO) may be described as the drift of a fluid through an aqueous gel towards an electrode during electrophoresis. The drift occurs when electrically neutral, or nearly neutral, molecules are present in a sample to be electrophoresed, and the gel medium carries a charge. When agarose is the medium, anionic residues such as pyruvate (and perhaps ester sulfate) are present and impart a net negative charge to the gel. Although the gel itself can't move anodally, the water sphere around it is pulled or distorted towards the cathode by hydrated cations associated with the bound anions. As a result, neutral molecules in the sample are gradually pulled towards the cathode with the water.

EEO is expressed numerically as relative mobility ($-m_r$) and is measured by preparing a 1% by weight solution of the agarose in 0.05 M, pH 8.6, barbital buffer. Three milliliters of the solution is poured on a clean microscope slide and allowed to gel at room temperature. Using a squared off No. 13 needle attached to a hypodermic syringe, a single hole is aspirated from the center of the gel. A standard test solution is prepared which consists of 10 mg/ml Dextran 500 (Pharmcia) and 2 mg/ml crystalline (4x) human albumin in 0.05 M, pH 8.6, barbital buffer. Using a small bore dropper, sufficient solution is added to nearly fill the aspirated hole. These slides are then placed in position for electrophoresis using paper wicks. A potential of 10 volts/cm (75 volts) is applied using constant voltage settings.

Electrophoresis is continued for three hours, then the slides removed. Visualization is accomplished in two stages. The slides are first placed in denatured (3A) ethanol for 15 minutes after which time the position of the dextran can be measured with respect to the origin (OD = distance from origin to dextran, center to center). After measuring, the slides are transferred to protein staining solution prepared from 0.5 g amido black in 50 ml glacial acetic acid, then made up to 500 ml with ethanol. After 15 minutes the slides are washed in a 1:1 acetic acid (5%):ethanol solution to remove excess stain. An hour is sufficient although the albumin position can usually be determined after 15 minutes. The distance from the center of the spot to the center of the origin is measured (OA = distance from origin to albumin). The degree of electroendosmosis (-m$_r$, can be calculated using the equation:

$$-m_r = (OD/OA+OD).$$

The gel strengths (also known as "breaking strenghts") referred to herein can be measured by using the procedure and apparatus described in U.S. patent 3,342,612 - Foster et al., and by providing an automatic drive to advance the plunger at a constant rate of 16.83 cm/min. Gelation is accomplished for purpose of the test by cooling the solution in a water bath at 10°C for 2 hours. The gel is then removed from the water bath and gel strength measured, using a circular plunger having an area of 1 cm$^2$.

Example 1

Twenty grams of hydroxyethylated agarose, which is already essentially desalted as defined herein, (Sea-Plaque® agarose) was dissolved in one liter of distilled water by first heating in a microwave oven then bringing the mixture to a boil on a hotplate. The solution was cooled to 54°C in a water bath and maintained at that temperature while two liters of azeotropic isopropyl alcohol (aze. IPA), also heated to 54°C, was added beneath the surface of the agarose sol. The mixture was stirred continuously. After addition was complete (2 min), the precipitate formed (Fraction A) was screened off using a U.S. Sieve Series No. 120 sieve (ASTM E11-87), and washed twice with 60% by weight IPA. The liquid was then added to another liter of aze. IPA containing 50 mL of 2M NaCl to cause a second precipitate (Fraction B) to form. This was subsequently screened off after the mixture had cooled to room temperature and the precipitate had settled. It was also washed with dilute IPA to remove salt. The two fractions were analyzed and compared with the starting material. The results are given in the following table:

| | Starting Material | Fraction A | Fraction B |
|---|---|---|---|
| Gel strength, g/cm$^2$ | 200 | 470 | 103 |
| EEO, -m$_r$ | 0.08 | 0.03 | 0.09 |
| Gelling temp. °C | 29.5 | 28.5 | 27.5 |
| Melting temp. °C | 63.5 | 68.0 | 62.0 |

Example 2

Other batches of hydroxyethylated derivatized agarose were treated by the same procedure on the same laboratory scale as in Example 1 to demonstrate the universality of the procedure. The results are given in the below table. It can be seen in every case where data were obtained, that the Viscosity and gel strength of the A fractions were markedly higher than those of the B fractions. Also, the pyruvate and EEO were higher in the B fractions. The gelling and melting temperatures of the A fractions were higher than those of the B fractions. It can also be seen that these fractions were different from the starting (unfractionated) materials.

|  | Gel Strength | % Pyruvate | EEO | tq | tm | Viscosity |
|---|---|---|---|---|---|---|
| Starting Material | 200 | 0.241 | 0.08 | 29.5 | 62.5 | 9.25 |
| Fraction A | 413 | 0.048 | 0.03 | 29.5 | 66.5 | 14.0 |
| Fraction B | 115 | 0.336 | 0.11 | 28.5 | 62.0 | 5.25 |
| Starting Material | 236 | 0.245 | 0.08 | 29.0 | 62.5 | 8.25 |
| Fraction A | 327 | 0.058 | 0.03 | 29.0 | 64.0 | NA |
| Fraction B | 103 | NA | 0.10 | 28.5 | 62.0 | NA |
| Starting Material | 244 | 0.265 | 0.08 | 29.5 | 63.0 | 8.0 |
| Fraction A | 420 | 0.058 | 0.03 | 28.5 | 68.0 | 13.35 |
| Fraction B | 103 | 0.381 | 0.10 | 28.0 | 62.5 | 5.20 |
| Starting Material | 333 | 0.259 | 0.09 | 30.0 | 64.0 | 7.25 |
| Fraction A | 490 | 0.059 | 0.03 | 29.0 | 72.0 | 12.3 |
| Fraction B | 150 | 0.391 | 0.11 | 28.0 | 64.0 | 4.8 |

Example 3

The fractionation of hydroxyethylated agarose was scaled up in a pilot plant, using 5 kg of hydroxyethylated agarose dissolved in 50 gallons (210 liters) of water in a jacketed tank. The solution was cooled to 160°F (71°C) and its pH adjusted to 8.0. Isopropyl alcohol (80% by weight) preheated to 105°F (41°C) was pumped into the stirred aqueous solution beneath the surface until the final volume was 205 gallons (215 liters). The temperature at this point was 120°F (48°C), and the final alcohol titer, 66%. The mixture was cooled by pumping cold water through the jacket until the temperature was 110°F (43°C). The precipitate was allowed to settle, then the second fraction was recovered by pumping the supernatant alcohol from the initial precipitation into an additional 100 gallons (105 liters) of 80% IPA at 105°F (40.5°C) containing seven pounds of sodium chloride. The total yield of recovered polysaccharides was 87%, divided 5:4 between the A and B fractions. Analytically, the materials were basically the same as the laboratory-prepared samples:

|  | Gel Strength | % Pyruvate | EEO | tq | tm | Viscosity |
|---|---|---|---|---|---|---|
| Starting Material | 227 | 0.173 | 0.06 | 29.0 | 65.0 | 7.25 |
| Fraction A | 510 | 0.060 | 0.02 | 31.0 | 70.0 | 15.25 |
| Fraction B | 117 | 0.289 | 0.10 | 29.0 | 62.5 | 4.65 |

Example 4A

The higher gel strength of the improved low gelling temperature/low melting temperature (LGT) agarose (Fraction A products) provides an advantage over existing products in a technique used in conjunction with pulsed field gel electrophoresis (PFGE) (U.S. Pat. 4,483,452, Columbia University). This technique involves the preparation of blocks of gel containing naked high molecular weight, for example chromosomal, DNA, and includes the steps of mixing cells with a solution of LGT agarose, cooling the mixture to cause it to gel, thus embedding the cells within the gel, and treating the gel with enzymes that dissolve away the cell walls but do not harm the DNA (U.S. Pat. 4,695,548 and 4,861,448, Columbia University). Without this embedding technique, the DNA would undergo sufficient shear through handling, particularly when being transferred to a gel for electrophoresis by means of a micropipetter, that it would be broken into smaller fragments of no use to the researcher. The gel plug containing the DNA is sliced and a small piece inserted into the well of a pulsed-field gel, sealed in place with a drop of low gelling temperature (LGT) agarose, and electrophoresed for the appropriate length of time. Handling the gel plug thus becomes a critical step in the operation. When manufacturing gel plugs containing high molecular weight DNA such as yeast chromosomal DNA or polymerized smaller DNA molecules such as lambda phage ("lambda ladders") to serve as molecular weight markers, removal of the plugs from the casting mold and the subsequent steps involving enzyme treatment and washing result in a high attrition rate when the product designed for this purpose (InCert® agarose, manufactured by FMC BioProducts, Rockland, ME 04841, U.S.A.) is used. However, when the new low gelling temperature agarose of the present invention was used to make such gel plugs, added strength resulted without the necessity of using higher concentrations, which is undesirable because a higher gel concentration can have an adverse effect on the diffusivity of reagents and the DNA. The added strength provides lower manufacturing costs of the plugs by lowering the rejection rate.

Example 4B

For some applications involving agarose gels, such as electrophoresis of proteins or of low molecular weight DNA, it is necessary to prepare the gels at higher concentrations than are used for separation of higher molecular weight compounds. Even though agarose does not have a very high viscosity at low concentrations, as the concentration is increased, the viscosity rises rapidly. For this reason, it is advantageous for the agarose to have an even lower viscosity than is typically found in most preparations, including the LGT type of agarose. Such a product is sold under the trademark NuSieve® agarose by FMC BioProducts and manufactured under U.S. Patent 3,956,273. Low viscosity gelling materials typically form gels which are more brittle than are the gels of higher viscosity samples of the same material. This makes it more difficult to handle the gels of the low viscosity material even though they may have a higher gel strength than gels made of a high viscosity material at a considerably lower concentration. The second fraction ("B" Fraction) obtained by the herein disclosed process has many of the attributes of NuSieve® agarose without its brittleness. In an effort to quantitate the brittleness of these gels, a test was devised wherein 3 mm thick gels were cast on a standard electrophoresis gel tray having a width of 12.6 cm and a length of 19.7 cm. After the gels had set for an hour at room temperature, the outer centimeter of gel was trimmed away from each side to eliminate the thicker portion created by the meniscus. The gel was then carefully cut into four 25.4 mm wide strips on the tray, using a clear plastic ruler as a guide. One by one, the strips were slowly pushed off the end of the tray, which was held horizontally a few centimeters above the lab bench. The weight of the overhanging gel caused it to break off at a certain point, depending upon its brittleness. The length of the broken fragment was measured and the four values average for each sample tested. The following table demonstrates the increased cohesive strength of the improved product of this invention:

| NuSieve® Lot No. | mm. of gel | B Fraction From Example No. | mm. of gel |
|---|---|---|---|
| 12439 | 79 | 2 - 3rd batch | 197 |
| 12836 | 46 | 2 - 4th batch | 197 |
| 12989 | 91.5 | 3 | 173.5 |
| 23516 | 66 | 9 | 197 |

Example 5

Because of the lower viscosity of the "B" Fraction, gels can be prepared at higher concentrations than can conveniently be prepared with the existing product, SeaPlaque® agarose. To illustrate this, 4% solutions were made of SeaPlaque® agarose and of the B Fraction made from it according to the process of Example 1. Viscosity measurements were made on the two solutions using a Brookfield® Synchro-lectric viscometer, model LVT at 60 rpm. The viscosities were 153 mPa.s for the unfractionated material and only 44.3 mPa.s for the B Fraction. This is a significant improvement when casting gels at such high concentrations as is necessary for separation of lower molecular weight DNA fragments.

Example 6

Another advantage of Fraction B obtained from derivatized agarose, for example hydroxyethyl agarose (or by hydroxyethylation of the second fraction of agarose) is its increased ability to sieve macromolecules during electrophoresis. It has been shown that SeaPlaque® agarose has a greater ability to separate macromolecules than does the underivatized agarose from which it is made (Serwer, P., Allen, J.L., and Hayes, S.J., Electrophoresis 1983, 4, 232-36).

Even though the aforementioned NuSieve® agarose is related to SeaPlaque® agarose, it is no more sieving than underivatized agarose. Thus, arranging these agaroses in order of ability to sieve, the following series is formed: underivatized = NuSieve®, SeaPlague®, B Fraction of fractionated SeaPlaque®. This increased sieving ability was demonstrated by running a series of gels in various concentrations ranging from 4% to 9% of NuSieve® agarose and of the B Fraction of SeaPlaque® agarose obtained by the process of Example 1. A standard DNA marker set was electrophoresed in these gels along with a marker dye, bromophenol blue, and the migration distances of the fragments and the dye measured on a photograph of the gel after marking the dye front in each lane and staining the DNA with ethidium bromide.

A plot of Rf vs. log base pairs (4% gels) shown in Figure 1 and based on the data given below proves that the fractionated material (Fraction B) causes a greater retardation of the DNA fragments than does NuSieve® agarose. That this is not an artifact brought about by the higher EEO of the fractionated sample is proven by plotting Rf rather than actual distance traveled, since any EEO effects would also be manifested on the bromophenol blue marker dye. The linear portion of the curves was estimated to range from 70-350 base pairs for Fraction B and from 120-600 bp for the NuSieve® agarose. This further shows that there is a greater degree of sieving in the Fraction B material, since its most useful range is at a lower molecular size.

|   | Base Pairs | NuSieve® Agarose Dist. | Fraction B Dist. | NuSieve® Rf | Fraction 8 Rf |
|---|---|---|---|---|---|
| 1 | 1353 | 0.55 | 0.25 | 0.164 | 0.057 |
| 2 | 1078 | 0.70 | 0.35 | 0.209 | 0.080 |
| 3 | 872 | 0.90 | 0.45 | 0.269 | 0.103 |
| 4 | 603 | 1.25 | 0.75 | 0.373 | 0.172 |
| 5 | 310 | 2.00 | 1.35 | 0.597 | 0.310 |
| 6 | 276 | 2.15 | 1.45 | 0.642 | 0.333 |
| 7 | 234 | 2.35 | 1.65 | 0.701 | 0.379 |
| 8 | 194 | 2.55 | 1.85 | 0.761 | 0.425 |
| 9 | 118 | 3.05 | 2.45 | 0.910 | 0.563 |
| 10 | 72 | 3.45 | 3.00 | 1.030 | 0.690 |

During the course of this experiment, another advantage of the fractionated agarose (Fraction B) became evident -- the gels were much clearer in appearance than their counterpart NuSieve® gels. The advantage of this is that visualization of separated substances may be enhanced. This observation was quantitated by determining the turbidity through 5 cm of 1% gels of the NuSieve® agarose and the B Fractions of Example 4B. The method is a standard one in which a standard curve of turbidity is prepared from a series of dilutions of a 4000 NTU Formazin turbidity standard and the turbidity of the test samples determined from the curve. The results were as follows:

| NuSieve® Lot No. | Turbidity (NTU) | Fraction B From Example No. | Turbidity (NTU) |
|---|---|---|---|
| 12439 | 132 | 2 - 3rd batch | 72 |
| 12836 | 158 | 2 - 4th batch | 78 |
| 12989 | 122 | 3 | 67 |
| 23516 | 155 | 9 | 65 |

It can readily be seen that the improved products form clearer gels than does the similar current product of commerce.

## Example 7

That the ability to fractionate hydroxyethylated agarose as described in Example 1 is not a function of the hydroxyethyl group is shown in the following experiment: Twenty grams of native agarose derived from Gelidium seaweed agar was dissolved in sufficient water to prepare a 2% solution. The pH was adjusted to 7.0-7.5. This solution was cooled to about 54°C and to it was added (beneath the surface) two liters of aze. IPA also heated to 54°C. The precipitated agarose (Fraction A) was separated from the alcohol by draining on a No. 120 sieve. The alcohol, now at about 42-45°C, was poured into another liter of aze. IPA in which had been dissolved 0.1 mol of sodium chloride. A second precipitate (Fraction B) formed and was allowed to settle overnight. Both fractions were rinsed with 60% IPA, squeezed out, and dried in a circulating air oven at 55°C prior to grinding through a U.S. Sieve Series No. 20 sieve in a laboratory sample mill. The experiment was repeated twice more starting with different batches of agarose. The results are given in the accompanying table.

|  | Starting Material | Fraction A | Fraction B |
|---|---|---|---|
| Gel strength, g/cm$^2$ | 1266 | 1900 | 520 |
| EEO, -m$_r$ | 0.10 | 0.04 | 0.17 |
| Gel strength, g/cm$^2$ | 1320 | 1800 | 560 |
| EEO, -m$_r$ | 0.10 | 0.04 | 0.16 |
| Gel strength, g/cm$^2$ | 1426 | 1800 | 580 |
| EEO, -m$_r$ | 0.10 | 0.04 | 0.17 |

Here, it can clearly be seen that there has been a fractionation into a higher and a lower gel strength material, and that the electroosmotic properties have been split.

## Example 8

To demonstrate that this process can also be scaled up, it was repeated in multi-kilogram batches in a pilot plant. Some typical results are presented in the following table:

|  | Starting Material | Fraction A | Fraction B |
|---|---|---|---|
| Gel strength, g/cm$^2$ | 1400 | 2006 | 587 |
| EEO, -m$_r$ | 0.10 | 0.04 | 0.17 |
| Viscosity, mPa.s* | 12.9 | 20.0 | 7.9 |
| Gel strength, g/cm$^2$ | 1400 | 2080 | NA |
| EEO,-m$_r$ | 0.10 | 0.04 | NA |
| Viscosity, mPa.s* | 12.9 | 28.25 | NA |
| Gel strength, g/cm$^2$ | 1344 | 2083 | NA |
| EEO,-m$_r$ | 0.10 | 0.04 | NA |
| Viscosity, mPa.s* | 15.65 | 20.0 | NA |

*Viscosity measured at 1.5% in 0.1 M NaCl at 60°C using Brookfield LVT viscometer equipped with an UL adapter.

## Example 9

In order to demonstrate that both analytically and functionally the same substances are formed by derivatizing fractionated agarose as are produced by fractionating derivatized agarose the following experiments were conducted:

A. The ultra-low endoosmotic fraction (Fraction A) produced from the first listed run of low endoosmotic agarose in the preceding Example 8 was treated as follows: Thirty grams of the agarose and 575 mL of distilled water were mixed and heated just to the boil in a microwave oven. The mixture was then held in a boiling water bath with agitation until solution was complete, then 6 mL of a commercially available solution of 4.4 M sodium borohydride in 14 M sodium hydroxide (Venpure™ from Morton Thiokol) were added, followed shortly by varying amounts of 12 M sodium hydroxide solution as indicated in the following table (products A, C, and E). Different amounts were required to allow for the different amounts of acidity produced by decomposition of the reagent 2-chloroethanol (CLETOH) which was used at different levels to vary the degree of substitution, so that the net concentration of base would remain at about 0.4-0.5 M. The reagent was added dropwise, after dilution with about two to four times its volume of water. The reaction mixtures were kept stirred for about an hour after reagent addition was complete, then diluted to about 1100 ml and were neutralized with 3 M acetic acid. They were then added with stirring to 2 volumes (that is, about 2400 mL) of azeotropic isopropyl alcohol (87.7% by weight) in order to recover the product which precipitated in the form of fibers, referred to hereinafter as coagulum. The coagulum was pressed on a U.S. Sieve Series No. 120 stainless steel screen and washed twice with 5-6 times the estimated weight of the retained alcohol in the pressed coagulum. The weight of interstitial liquid was estimated by weighing the coagulum and subtracting 30 g, that is, a 100% recovery was assumed. The products were dried in a 55°C circulating air oven overnight and then allowed to stand in the air to establish equilibrium with the moisture. They were then weighed, ground through a U.S. Sieve Series No. 20 sieve in a laboratory mill, and tested.

B. Like experiments were carried out using the Fraction B material from the first listed fractionation in the preceding Example 8 to give products B, D and F.

The amount of key reagents and analyses of the two sets of products are presented in the following table:

| Sample | A | C | E | B | D | F |
|---|---|---|---|---|---|---|
| mL 12 M NaOH | 31.0 | 34.25 | 27.25 | 31.0 | 34.25 | 31.0 |
| mL CLETON | 12.1 | 18.78 | 9.08 | 12.1 | 18.75 | 9.06 |
| meq. CLETON | 180 | 280 | 135 | 180 | 280 | 135 |
| meq. total Alkali | 482 | 521 | 437 | 482 | 521 | 437 |
| Net M Alkali | 0.5 | 0.4 | 0.5 | 0.5 | 0.4 | 0.5 |
| Gel Temp | 26.5° | 22.5° | 29.0° | 27.0° | 21.0° | 29.5° |
| Melt Temp | 62.0° | 56.0° | 67.0° | 59.5° | <53° | 62.0° |
| Gel Strength | 207 | 82 | 390 | 90 | 46 | 124 |
| EEO | 0.04 | 0.03 | 0.06 | 0.10 | 0.08 | 0.07 |
| % Pyruvate | 0.07 | NA | NA | 0.336 | NA | NA |

The level of chloroethanol used in making products E and F led to the desired degree of substitution and these products are respectively comparable to the A and B Fractions of fractionated hydroethylated agarose.

A dispersion of 30.0 g of the same fractionated agarose used in Example 9 and 575 mL of distilled water was heated just to boiling in a microwave oven, then transferred to a boiling water bath where it was held with stirring until the total heating time was about 30 min. It was then cooled to 83°C and to it was added 4.0 mL of a 4.4 M NaBH$_4$/14 N NaOH solution, followed about 14 min. later by 35.8 mL of 12 M NaOH, bringing the total alkalinity to 503 meq. [(4)(18.4) + (35.8) (12)]. Into a dropping funnel positioned above the vortex created by the agitator, was poured 17.3 at dimethylsulfate (183 meq.). Dropwise addition required slightly less than 12 min.; temperature of the solution was 85°C throughout the addition. Two hours after the start of the addition, 400 mL distilled water was added, followed by about 106 mL of 3M acetic acid to effect neutralization. The mixture was then poured, with rapid stirring, into 2400 mL azeotropic isopropyl alcohol previously warmed to 42°C to prevent gelation during the coagulation process. The coagulum was drained off and pressed on a U.S. Standard Sieve Series No. 120 sieve, then washed twice with five times the estimated residual liquid weight of 60% isopropyl alcohol. After drying and equilibration in the air, the recovered product weighed 27.68 g. It was ground to a size able to pass through a No. 20 sieve and analyzed for chracterizational properties of interest:

1% Gel strength = 627 g/cm$^2$

1.5% Gelling temp. = 29.0°C

1.5% Melting temp. = 69.5°C

These properties were similar to those obtained with fractionated hydroxyethyl agarose and the material was tested further to demonstrate that it was functionally comparable.

Example 11

In this example, a hydroxypropyl agarose was prepared. Dissolution of the agarose was as in Example 10. Total alkali added was 314 meq.; total propylene oxide used was 739 meq. (50 mL), but since it does not consume alkali in hydrolyzing, extra alkali was not required. The addition time was 49 min. and the total elapsed time from start of addition to dilution and neutralization was two hours. Coagulation and other recovery steps were as described to the methyl derivative. Yield was 30.1 g. The gel strength was 216 g/cm$^2$, gelling temperature 27.5°C, and melting temperature 67.0°C.

Example 12

The process of Example 7 was repeated except that propylene glycol containing 9% water was used to fractionate the agarose. A solution of agarose in 91% propylene glycol was cooled from approximately 130°C to room temperature, during which time a precipitate formed. This precipitate was separated from the liquid phase, washed with 60% IPA, dried and ground, to yield a material with a lower pyruvate content, and a lower EEO (0.05 vs. 0.10) than the starting unfractionated agarose, and a slightly higher gel strength (1394 g/cm$^2$ vs. 1314 g/cm$^2$). Thirty grams of this fractionated material was hydroxyethylated using the same level of 2-chloroethanol as used in Example 9, product E, since This provided approximately the correct degree of substitution. The properties were within the range expected for this new product, with a higher gel strength and lower EEO Than low gelling (low melting) temperature agarose currently available. They were 370 g/cm$^2$ and 0.02, resp. The gelling and melting temperatures were 28.0°C and 63.5°C resp.

Example 13

To further illustrate the similarities between the fractionated derivatized agarose and the derivatized fractionated agarose, a pilot plant run was made using a blend of the fractionated agaroses described in Example 8. Twenty-six kilograms of fractionated agarose was dissolved in 85 gallons (357 liters) of filtered water by injection of live steam. After a temperature of 190°F (86°C) was reached, the rate of steam injection was slowed and the mixture held just below the boiling point for an additional half hour. The temperature was allowed to fall to 180°F (82°C) before 1500 mL of commercially available 4.4 M sodium borohydride in 14 M sodium hydroxide solution (Venpure$^®$ from Morton Thiokol) was added and the mixture held for 20 min. at 180°F (82°C). Forty-tour pounds (20 kg) of sodium hydroxide was dissolved in 10 gallons (42 liters) of cold, filtered water and added to the agarose solution. The volume of the solution was then adjusted to 135 gallons (567 liters) by adding water. Over a period of about three hours, 11.5 lb. (5 kg) of ethylene oxide was bubbled into the reaction mixture, and when addition was complete, stirring was continued for an additional half hour before 33 gallons (139 liters) of 3 M acetic acid was added to lower the pH to 7.0. The hydroxyethylated agarose was then recovered by precipitation into four volumes of 80% IPA preheated to 100-110°F (ca. 40°C). The mixture was cooled to <80°F (26°C) and separated from the liquid by means of a vibrating screen. It was washed five times with 200-gallon (840 liter) portions of alcohol -- 3 X 60% and 2 X 80% -- then squeezed, shredded, dried and ground. The following table compares the analysis of this product with that of the product of fractionation of previously hydroxyethylated agarose of Example 3.

Fractionated hydroxyethylated product from Ex. 3 = SPQ-A; Hydroxyethylated fractionated product from Ex. 13 = HE-XLE, Standard hydroxyethylated agarose of commerce = SPQ.

|            | SPQ-A | HE-XLE | SPQ  |
|------------|-------|--------|------|
| % Moisture | 3.59  | 6.64   | 8.73 |
| % Ash      | 0.13  | 0.23   | 0.33 |
| % Sulfate  | 0.04  | 0.05   | 0.03 |

(continued)

|  | SPQ-A | HE-XLE | SPQ |
|---|---|---|---|
| 1% Gel strength (g/cm$^2$) | 510 | 510 | 227 |
| EEO (-m$_r$) | 0.02 | 0.02 | 0.06 |
| Gelling temp. °C | 31.0 | 30.0 | 29.0 |
| Melting temp., °C | 70.0 | 68.5 | 65.0 |
| % Pyruvate | 0.060 | - | 0.173 |

The higher gel strength and lower EEO of the product of this invention (first two columns) can be readily seen by comparison with the standard product of commerce, SeaPlaque® agarose shown in the third column.

**Claims**

1.  A derivatized agarose product characterized by a gelling temperature in the range of from 20°C to 32°C; a gel strength in the range of from 50 to 900g/cm$^2$ at 1.0 wt. % concentration, wherein the gel strength increases within the above range as the gelling temperature increases within the above range; and electroendosmosis value of less than 0.04; a Brookfield viscosity measured at 1.5% concentration in 0.1 M NaCl at 60°C of more than 12 mPa; and a pyruvate content of less than 0.07 wt %.

2.  An agarose product according to claim 1 characterized in that the gelling temperature is in the range of from 27°C to 30°C, and the gel strength is in the range of from 200 to 550gm/cm$^2$.

3.  A derivatized agarose product according to either of claims 1 to 2 characterized in that the agarose is a C$_2$-C$_3$ hydroxyalkylated agarose a C$_1$-C$_3$ alkylated agarose, glyoxal agarose, or dihydroxypropyl agarose.

4.  A derivatized agarose product according to claim 3 characterized in that the agarose is a hydroxyethylated agarose.

5.  A derivatized agarose product according to claim 3 characterized in that the agarose is methylated agarose.

6.  An aqueous gel characterized in that it is a gelled solution in water of a derivatized agarose product according to any of claims 1 to 5.

7.  A process for the preparation of a derivatized agarose product according to claim 1; Fraction A and an optional second derivatized agarose product Fraction B, characterized by the steps of:

    i) forming a solution of a derivatized agarose in an aqueous medium or in a C$_2$-C$_5$ polyol containing from 1 to 15% by weight of water, wherein the salt content of the medium is below 10mm of salt as NaCl.
    ii) contacting the above solution with a water-miscible solvent which is a C$_1$-C$_4$ alkanol or acetone when the solution is aqueous, or cooling the solution when the solution comprises a C$_2$-C$_5$ polyol, to form a precipitate,
    iii) isolating the precipitate from the solution, wherein the precipitate is the derivatized agarose of claim 1 Fraction A, and optionally,
    iv) contacting the solution obtained in step (iii) with an aqueous salt solution in amount sufficient to produce a precipitate comprising the second derivatized agarose product, Fraction B.

8.  A process according to claim 7 characterized in that the derivatized agarose employed in step (i) is a C$_2$-C$_3$ hydroxyalkylated agarose, a C$_1$-C$_3$ alkylated agarose, glyoxal agarose, or dihydroxypropyl agarose.

9.  A process according to claim 8 characterized in that the derivatized agarose product is hydroxyethylated agarose.

10. A process according to claim 8 characterized in that the derivatized agarose product is methylated agarose.

11. A process according to claim 7 characterized in that in step (i) the aqueous medium has a pH of from 6.0 to 8.0.

12. A process according to claim 11 characterized in that in step (i) the aqueous medium has a pH of from 7.0 to 7.4.

**13.** A process according to claim 11 characterized in that the pH is 7.2

**14.** A process according to any of claims 7 to 13 characterized in that the salt content of the solution formed in step (i) is less than 4mM.

**15.** A process according to claim 14 characterized in that the salt content is in the range of from 0.003 to 0 4 mM.

**16.** A process according to any of claims 7 to 15 characterized in that the derivatized agarose employed in step A is obtained by derivatizing an agarose from Gelidium or Pterocladia algal species, a mixture of Geldium and/or Pterocladia with Gracilaria or from any mixture thereof.

**17.** A process according to any of claims 7 to 16 characterized in that in step (ii) the solvent is isopropyl alcohol.

**18.** A process according to any of claim 7 to 17 characterized in that in step (i) the $C_2$-$C_5$ polyol is propylene glycol.

**19.** A process according to any of claims 7 to 18 characterized in that in step (ii) the solvent is added to the aqueous solution.

**20.** A process according to claim 19 characterized in that the solvent is added below the surface of the solution while the solution is being stirred

**21.** A process according to any of claims 7 to 20 characterized in that in step (iv) the aqueous salt solution is aqueous sodium chloride.

**22.** A process according to any of claims 7 to 21 in step (iv) a $C_1$-$C_4$ alkanol or acetone is also added to the solution.

**23.** A process for the preparation of a derivatized agarose product according to claim 1 characterized by the steps of:

(i) forming a solution of a derivatized agarose in an aqueous medium wherein the aqueous medium has a salt content corresponding to less than 4mM sodium chloride,
(ii) adding a water-miscible solvent below the surface of the above solution while the solution is being stirred, wherein the solvent is a $C_1$-$C_4$ alkanol or acetone, to form a precipitate, and
(iii) isolating the precipitate from the solution, wherein the precipitate is the derivatized agarose product of claim 1.

**24.** A process according to claim 23 characterized in that the derivatized agarose employed in step (i) is obtained by derivatizing an agarose from Gelidium or Pterocladia algal species, a mixture of Geldium or Pterocladia with Gracilaria, or from any mixture thereof, and wherein the derivatized agarose is a $C_2$-$C_3$ hydroxyalkylated agarose, a $C_1$-$C_3$ alkylated agarose, glyoxal agarose, or dihydroxypropyl agarose.

**25.** A process for the preparation of a derivatized agarose product of claim 1 Fraction A, and optionally a second derivatized agarose Fraction B characterized by the steps of:

(i) forming a solution of an agarose in an aqueous medium or in a $C_2$-$C_5$ polyol containing from 1 to 15% water wherein the aqueous medium has a salt content corresponding to less than 4mM sodium chloride,
(ii) contacting the above solution with a water-miscible solvent which is a $C_1$-$C_4$ alkanol or acetone when the solution is aqueous, or cooling the solution when the solution comprises a $C_2$-$C_5$ polyol, to form a precipitate,
(iii) isolating the precipitate from the solution,
(iv) reacting the precipitate with a derivatizing agent to produce the derivatized agarose product of claim 1 Fraction A, and optionally,
v) contacting the solution resulting from step (iii) with a quantity of an aqueous salt solution in amount sufficient to produce a precipitate, and
vi) reacting the precipitate with a derivatizing agent to produce the second derivatized agarose product, Fraction B.

**26.** A process according to claim 25 wherein the derivatized agarose product is a $C_2$-$C_3$ hydroxyalkylated agarose, a $C_1$-$C_3$ alkylated agarose, glyoxal agarose, or dihydroxypropyl agarose.

**27.** A process according to claim 26 characterized in that the derivatized agarose product is hdyroxyethylated agarose or methylated agarose.

**28.** A process according to any claims 25 to 27 characterized in step (i) the aqueous medium has a pH of from 6.0 to 8.0.

**29.** A process according to claim 28 characterized in that the salt content corresponds 2mM or less of sodium chloride.

**30.** A process according to any of claims 25 to 29 characterized in that the agarose employed in step (i) is obtained from <u>Gelidium</u> or <u>Pterocladia</u> algal species, a mixture of <u>Gelidium</u> or <u>Pterocladia</u> with <u>Gracilaria</u>, or from any mixture thereof.

**31.** A process according to any of claims 25 to 30 characterized in that in step (ii) the solvent is isopropyl alcohol.

**32.** A process according to any of claims 25 to 31 characterised in that the solvent is added below the surface of the solution while the solution is being stirred.

**33.** A process according to any of claims 25 to 32 charactensed in that in step (v) a $C_1$-$C_4$ alkanol or acetone is also added to the solution.

**Patentansprüche**

**1.** Derivatisiertes Agaroseprodukt, gekennzeichnet durch eine Geliertemperatur in dem Bereich von 20°C bis 32°C; eine Gelfestigkeit in dem Bereich von 50 bis 900 g/cm$^2$ bei einer Konzentration von 1 Gew.-%, worin die Gelfestigkeit in dem obigen Bereich mit zunehmender Geliertemperatur in dem obigen Bereich zunimmt und einen Elektroendosmosewert von weniger als 0,04; eine bei einer Konzentration von 1,5% in 0,1 M NaCl bei 60°C gemessene Brookfield-Viskosität von mehr als 12 mPa und einen Pyruvatgehalt von weniger als 0,07 Gew.-%.

**2.** Agaroseprodukt nach Anspruch 1, dadurch gekennzeichnet dass die Geliertemperatur in dem Bereich von 27°C bis 30°C und die Gelfestigkeit in dem Bereich von 200 bis 550 g/cm$^2$ liegt.

**3.** Derivatisiertes Agaroseprodukt nach einem der Ansprüche 1 bis 2, dadurch gekennzeichnet, dass die Agarose eine $C_2$-$C_3$-hydroxyalkylierte Agarose, eine $C_1$-$C_3$-alkylierte Agarose, Glyoxalagarose oder Dihydroxypropylagarose ist.

**4.** Deilvatisiertes Agaroseprodukt nach Anspruch 3, dadurch gekennzeichnet, dass die Agarose eine hydroxyethylierte Agarose ist.

**5.** Derivatisiertes Agaroseprodukt nach Anspruch 3, dadurch gekennzeichnet, dass die Agarose methylierte Agarose ist.

**6.** Wässriges Gel, dadurch gekennzeichnet, dass es eine gelierte Lösung in Wasser eines derivatisierten Agaroseproduktes nach einem der Ansprüche 1 bis 5 ist.

**7.** Verfahren zur Herstellung eines derivatisierten Agaroseproduktes nach Anspruch 1, Fraktion A und eines wahlweise zweiten derivatisierten Agaroseproduktes, Fraktion B, das durch die folgenden Schritte gekennzeichnet ist:

    i) Bilden einer Lösung aus einer derivatisierten Agarose in einem wässrigen Medium oder in einem $C_2$-$C_5$-Polyol, das von 1 bis 15 Gew.-% Wasser enthält, worin der Salzgehalt des Mediums unter 10 mM Salz als NaCl beträgt.

    ii) Kontaktieren der obigen Lösung mit einem mit Wasser mischbaren Lösungsmittel, welches ein $C_1$-$C_4$-Alkanol oder Aceton ist, wenn die Lösung wässrig ist, oder Abkühlen der Lösung, wenn die Lösung ein $C_2$-$C_5$-Polyol umfasst, zur Bildung eines Präzipitates,

    iii) Isolieren des Präzipitates aus der Lösung, worin das Präzipit die derivatisierte Agarose nach Anspruch 1, Fraktion A, ist und wahlweise

**14**

iv) Kontaktieren der in Schrift (iii) erhaltenen Lösung mit einer wässrigen Salzlösung in einer ausreichenden Menge, um ein Präzipitat herbeizuführen, welches das zweite derivatisierte Agaroseprodukt, Fraktion B, umfasst.

8. Verfahren nach Anspruch 7, dadurch gekennzeichnet, dass die in Schrift (i) eingesetzte derivatisierte Agarose eine $C_2$-$C_3$-hydroxyalkylierte Agarose, eine $C_1$-$C_3$-alkylierte Agarose, Glyoxalagarose oder Dihydroxypropylagarose ist.

9. Verfahren nach Anspruch 8, dadurch gekennzeichnet, dass das derivatisierte Agaroseprodukt hydroxyethylierte Agarose ist.

10. Verfahren nach Anspruch 8, dadurch gekennzeichnet, dass das derivatisierte Agaroseprodukt methylierte Agarose ist.

11. Verfahren nach Anspruch 7, dadurch gekennzeichnet, dass in Schritt (i) das wässrige Medium einen pH von 6,0 bis 8,0 aufweist.

12. Verfahren nach Anspruch 11, dadurch gekennzeichnet, dass in Schritt (i) das wässrige Medium einen pH von 7,0 bis 7,4 aufweist.

13. Verfahren nach Anspruch 11, dadurch gekennzeichnet, dass der pH 7,2 ist.

14. Verfahren nach einem der Ansprüche 7 bis 13, dadurch gekennzeichnet, dass der Salzgehalt der in Schritt (i) gebildeten Lösung weniger als 4 mM beträgt.

15. Verfahren nach Anspruch 14, dadurch gekennzeichnet, dass der Salzgehalt in dem Bereich von 0,003 bis 0,4 mM liegt.

16. Verfahren nach einem der Ansprüche 7 bis 15, dadurch gekennzeichnet, dass die in Schritt A eingesetzte derivatisierte Agarose durch Derivatisieren einer Agarose aus Gelidium- oder Pterocladia-Algenspezies, einem Gemisch aus Gelidium und/oder Pterocladia mit Gracilaria oder aus jedwedem Gemisch davon erhalten wird.

17. Verfahren nach einem der Ansprüche 7 bis 16, dadurch gekennzeichnet, dass in Schritt (ii) das Lösungsmittel Isopropylalkohol ist.

18. Verfahren nach einem der Ansprüche 7 bis 17, dadurch gekennzeichnet, dass in Schritt (i) das $C_2$-$C_5$-Polyol Propylenglycol ist.

19. Verfahren nach einem der Ansprüche 7 bis 18, dadurch gekennzeichnet, dass in Schritt (ii) das Lösungsmittel der wässrigen Lösung zugefügt wird.

20. Verfahren nach Anspruch 19, dadurch gekennzeichnet, dass das Lösungsmittel unter der Oberfläche der Lösung zugefügt wird, während die Lösung gerührt wird.

21. Verfahren nach einem der Ansprüche 7 bis 20, dadurch gekennzeichnet, dass in Schritt (iv) die wässrige Salzlösung wässriges Natriumchlorid ist.

22. Verfahren nach einem der Ansprüche 7 bis 21, in Schritt (iv) der Lösung auch ein $C_1$-$C_4$-Alkanol oder Aceton zugefügt wird.

23. Verfahren zur Herstellung eines derivatisierten Agaroseproduktes nach Anspruch 1, das durch die folgenden Schritte gekennzeichnet ist:

(i) Bilden einer Lösung aus einer derivatisierten Agarose in einem wässrigen Medium, worin das wässrige Medium einen Salzgehalt aufweist, der weniger als 4 mM Natriumchlorid entspricht,

(ii) Zufügen eines in Wasser mischbaren Lösungsmittels unter der Oberfläche der obigen Lösung, während die Lösung gerührt wird, worin das Lösungsmittel ein $C_1$-$C_4$-Alkanol oder Aceton ist, zur Bildung eines Präzipitates und

15

(iii) Isolieren des Präzipitates aus der Lösung, worin das Präzipitat das derivatisierte Agaroseprodukt nach Anspruch 1 ist.

24. Verfahren nach Anspruch 23, dadurch gekennzeichnet, dass die in Schritt (i) eingesetzte derivatisierte Agarose durch Derivatisieren einer Agarose aus Gelidium- oder Pterocladia-Algenspezies, einem Gemisch aus Gelidium oder Pterocladia mit Gracilaria oder aus jedwedem Gemisch davon erhalten wird und worin die derivatisierte Agarose eine $C_2$-$C_3$-hydroxyalkylierte Agarose, eine $C_1$-$C_3$-alkylierte Agarose, Glyoxalagarose oder Dihydroxypropylagarose ist.

25. Verfahren für die Herstellung eines derivatisierten Agaroseproduktes nach Anspruch 1, Fraktion A und wahlweise einer zweiten derivatisierten Agarose, Fraktion B, das durch die folgenden Schritte gekennzeichnet ist:

(i) Bilden einer Lösung aus einer Agarose in einem wässrigen Medium oder in einem $C_2$-$C_5$-Polyol, das von 1 bis 15% Wasser enthält, worin das wässrige Medium einen Salzgehalt aufweist, der weniger als 4 mM Natriumchlorid entspricht,

(ii) Kontaktieren der obigen Lösung mit einem mit Wasser mischbaren Lösungsmittel, das ein $C_1$-$C_4$-Alkanol oder Aceton ist, wenn die Lösung wässrig ist, oder Abkühlen der Lösung, wenn die Lösung ein $C_2$-$C_5$-Polyol umfasst, zur Bildung eines Präzipitates,

(iii) Isolieren des Präzipitates aus der Lösung,

(iv) Reagieren des Präzipitates mit einem Derivatisierungsmittel zur Herstellung des derivatisierten Agaroseproduktes nach Anspruch 1, Fraktion A und wahlweise

(v) Kontaktieren der sich aus Schritt (iii) ergebenden Lösung mit einer Menge einer wässrigen Salzlösung in einer Menge, die zur Herbeiführung eines Präzipitates ausreicht und

(vi) Reagieren des Präzipitates mit einem Derivatisierungsmittel zur Herstellung des zweiten derivatisierten Agaroseproduktes, Fraktion B.

26. Verfahren nach Anspruch 25, worin das derivatisierte Agaroseprodukt eine $C_2$-$C_3$-hydroxyalkylierte Agarose, eine $C_1$-$C_3$-alkylierte Agarose, Glyoxalagarose oder Dihydroxypropylagarose ist.

27. Verfahren nach Anspruch 26, dadurch gekennzeichnet, dass das derivatisierte Agaroseprodukt hydroxyethylierte Agarose oder methylierte Agarose ist.

28. Verfahren nach einem der Ansprüche 25 bis 27, dadurch gekennzeichnet, dass in Schritt (i) das wässrige Medium einen pH von 6,0 bis 8,0 aufweist.

29. Verfahren nach Anspruch 28, dadurch gekennzeichnet, dass der Salzgehalt 2 mM Natriumchlorid oder weniger entspricht.

30. Verfahren nach einem der Ansprüche 25 bis 29, dadurch gekennzeichnet, dass die in Schritt (i) eingesetzte Agarose aus Gelidium- oder Pterocladia-Algenspezies, einem Gemisch aus Gelidium oder Pterocladia mit Gracilaria oder aus jedwedem Gemisch davon erhalten wird.

31. Verfahren nach einem der Ansprüche 25 bis 30, dadurch gekennzeichnet, dass in Schritt (ii) das Lösungsmittel Isopropylalkohol ist.

32. Verfahren nach einem der Ansprüche 25 bis 31, dadurch gekennzeichnet, dass das Lösungsmittel unter der Oberfläche der Lösung zugefügt wird, während die Lösung gerührt wird.

33. Verfahren nach einem der Ansprüche 25 bis 32, dadurch gekennzeichnet, dass in Schritt (v) der Lösung auch ein $C_1$-$C_4$-Alkanol oder Aceton zugefügt wird.

**Revendications**

1. Produit d'agarose dérivatisé caractérisé par une température de gélification dans la plage de 20°C à 32°C; une densité de gel dans la plage de 50 à 900 g/cm$^2$ à une concentration de 1,0% en poids, dans lequel la densité du gel augmente dans la plage ci-dessus au fur et à mesure que la température de gélification augmente dans la plage ci-dessus; et une valeur d'électro-endosmose de moins de 0,04; une viscosité Brookfield mesurée à une concentration de 1,5% dans du NaCl 0,1M à 60°C de plus de 12 mPa; et une teneur en pyruvate de moins de 0,07% en poids.

2. Produit d'agarose selon la revendication 1 caractérisé en ce que la température de gélification est dans la plage de 27°C à 30°C, et la densité du gel est dans la plage de 200 à 550 gm/cm$^2$.

3. Produit d'agarose dérivatisé selon la revendication 1 ou la revendication 2 caractérisé en ce que l'agarose est un agarose hydroxyalkylé $C_2$-$C_3$, un agarose alkylé $C_1$-$C_3$, un agarose glyoxylique, ou un agarose dihydroxypropylique.

4. Produit d'agarose dérivatisé selon la revendication 3 caractérisé en ce que l'agarose est un agarose hydroxyéthylé.

5. Produit d'agarose dérivatisé selon la revendication 3 caractérisé en ce que l'agarose est de l'agarose méthylé.

6. Gel aqueux caractérisé en ce que c'est une solution gélifiée dans de l'eau d'un produit d'agarose dérivatisé selon l'une quelconque des revendications 1 à 5.

7. Procédé pour la préparation d'un produit d'agarose dérivatisé selon la revendication 1; Fraction A et un deuxième produit facultatif d'agarose dérivatisé, Fraction B, caractérisé par les étapes consistant à:

   i) former une solution d'un agarose dérivatisé dans un milieu aqueux ou dans un polyol $C_2$-$C_5$ contenant de 1 à 15% en poids d'eau, dans lequel la teneur en sel du milieu est inférieure à 10 mM de sel en tant que NaCl.
   ii) mettre en contact la solution ci-dessus avec un solvant miscible dans l'eau qui est un alcanol $C_1$-$C_4$ ou de l'acétone lorsque la solution est aqueuse, ou refroidir la solution lorsque la solution comprend un polyol $C_2$-$C_5$, afin de former un précipité,
   iii) isoler le précipité de la solution, dans lequel le précipité est l'agarose dérivatisé de la revendication 1, Fraction A, et facultativement,
   iv) mettre en contact la solution obtenue à l'étape (iii) avec une solution aqueuse salée selon une quantité suffisante pour produire un précipité comprenant le deuxième produit d'agarose dérivatisé, Fraction B.

8. Procédé selon la revendication 7 caractérisé en ce que l'agarose dérivatisé utilisé à l'étape (i) est un agarose hydroxyalkylé $C_2$-$C_3$, un agarose alkylé $C_1$-$C_3$, un agarose glyoxylique, ou un agarose dihydroxypropylique.

9. Procédé selon la revendication 8 caractérisé en ce que le produit d'agarose dérivatisé est de l'agarose hydroxyéthylé.

10. Procédé selon la revendication 8 caractérisé en ce que le produit d'agarose dérivatisé est de l'agarose méthylé.

11. Procédé selon la revendication 7 caractérisé en ce que à l'étape (i) le milieu aqueux a un pH de 6,0 à 8,0.

12. Procédé selon la revendication 11 caractérisé en ce que à l'étape (i) le milieu aqueux a un pH de 7,0 à 7,4.

13. Procédé selon la revendication 11 caractérisé en ce que le pH est de 7,2.

14. Procédé selon l'une quelconque des revendications 7 à 13 caractérisé en ce que la teneur en sel de la solution formée à l'étape (i) est inférieure à 4 mM.

15. Procédé selon la revendication 14 caractérisé en ce que la teneur en sel est dans la plage de 0,003 à 0,4 mM.

16. Procédé selon l'une quelconque des revendications 7 à 15 caractérisé en ce que l'agarose dérivatisé utilisé à l'étape A est obtenu en dérivatisant un agarose provenant des espèces d'algues <u>Gelidium</u> ou <u>Pterocladia</u>, d'un mélange de <u>Gelidium</u> et/ou de <u>Pterocladia</u> avec de la <u>Gracilaria</u> ou d'un mélange quelconque de celles-ci.

**17.** Procédé selon l'une quelconque des revendications 7 à 16 caractérisé en ce que à l'étape (ii) le solvant est de l'alcool isopropylique.

**18.** Procédé selon l'une quelconque des revendications 7 à 17 caractérisé en ce que à l'étape (i) le polyol $C_2$-$C_5$ est du propylène glycol.

**19.** Procédé selon l'une quelconque des revendications 7 à 18 caractérisé en ce que à l'étape (ii) le solvant est ajouté à la solution aqueuse.

**20.** Procédé selon la revendication 19 caractérisé en ce que le solvant est ajouté sous la surface de la solution tandis que la solution est agitée.

**21.** Procédé selon l'une quelconque des revendications 7 à 20 caractérisé en ce que à l'étape (iv) la solution aqueuse salée est du chlorure de sodium aqueux.

**22.** Procédé selon l'une quelconque des revendications 7 à 21 à l'étape (iv) un alcanol $C_1$-$C_4$ ou de l'acétone est aussi ajouté à la solution.

**23.** Procédé pour la préparation d'un produit d'agarose dérivatisé selon la revendiction 1 caractérisé par les étapes consistant à:

i) former une solution d'un agarose dérivatisé dans un milieu aqueux dans lequel le milieu aqueux a une teneur en sel correspondant à moins de 4 mM de chlorure de sodium.
ii) ajouter un solvant miscible dans l'eau sous la surface de la solution ci-dessus tandis que la solution est agitée, dans lequel le solvant est un alcanol $C_1$-$C_4$ ou de l'acétone, pour former un précipité, et
iii) isoler le précipité de la solution, dans lequel le précipité est le produit d'agarose dérivatisé de la revendication 1.

**24.** Procédé selon la revendication 23 caractérisé en ce que l'agarose dérivatisé utilisé à l'étape (i) est obtenu en dérivatisant un agarose provenant des espèces d'algues Gelidium ou Pterocladia, d'un mélange de Gelidium ou de Pterocladia avec de la Gracilaria ou d'un mélange quelconque de celles-ci, et dans lequel l'agarose dérivatisé est un agarose hydroxyalkylé $C_2$-$C_3$, un agarose alkylé $C_1$-$C_3$, un agarose glyoxylique, ou un agarose dihydroxypropylique.

**25.** Procédé pour la préparation d'un produit d'agarose dérivatisé de la revendication 1, Fraction A, et facultativement d'un deuxième agarose dérivatisé, Fraction B, caractérisé par les étapes consistant à:

i) former une solution d'un agarose dans un milieu aqueux ou dans un polyol $C_2$-$C_5$ contenant de 1 à 15% d'eau dans lequel le milieu aqueux a une teneur en sel correspondant à moins de 4 mM de chlorure de sodium.
ii) mettre en contact la solution ci-dessus avec un solvant miscible dans l'eau qui est un alcanol $C_1$ - $C_4$ ou de l'acétone lorsque la solution est aqueuse, ou refroidir la solution lorsque la solution comprend un polyol $C_2$-$C_5$, afin de former un précipité,
iii) isoler le précipité de la solution,
iv) mettre le précipité à réagir avec un agent de dérivatisation pour produire le produit d'agarose dérivatisé de la revendication 1, Fraction A, et facultativement,
v) mettre en contact la solution résultant de l'étape (iii) avec une quantité d'une solution aqueuse salée selon une quantité suffisante pour produire un précipité, et
vi) mettre le précipité à réagir avec un agent de dérivatisation pour produire le deuxième produit d'agarose dérivatisé, Fraction B.

**26.** Procédé selon la revendication 25 dans lequel le produit d'agarose dérivatisé est un agarose hydroxyalkylé $C_2$-$C_3$, un agarose alkylé $C_1$-$C_3$, un agarose glyoxylique, ou un agarose dihydroxypropylique.

**27.** Procédé selon la revendication 26 caractérisé en ce que le produit d'agarose dérivatisé est de l'agarose hydroxyéthylé ou de l'agarose méthylé.

**28.** Procédé selon l'une quelconque des revendications 25 à 27 caractérisé en ce que à l'étape (i) le milieu aqueux a un pH de 6,0 à 8,0.

**29.** Procédé selon la revendication 28 caractérisé en ce que la teneur en sel correspond à 2 mM ou moins de chlorure de sodium.

**30.** Procédé selon l'une quelconque des revendications 25 à 29 caractérisé en ce que l'agarose utilisé à l'étape (i) est obtenu des espèces d'algues Gelidium ou Pterocladia, d'un mélange de Gelidium ou de Pterocladia avec de la Gracilaria, ou d'un mélange quelconque de celles-ci.

**31.** Procédé selon l'une quelconque des revendications 25 à 30 caractérisé en ce que à l'étape (ii) le solvant est de l'alcool isopropylique.

**32.** Procédé selon l'une quelconque des revendications 25 à 31 caractérisé en ce que le solvant est ajouté sous la surface de la solution tandis que la solution est agitée.

**33.** Procédé selon l'une quelconque des revendications 25 à 32 caractérisé en ce que à l'étape (v) un alcanol $C_1$-$C_4$ ou de l'acétone est ajouté aussi à la solution.

FIG. 1

FIG.2